# EUROPEAN PATENT APPLICATION

(11) **EP 4 668 555 A1**
(43) Date of publication of application: **24.12.2025**
(21) Application number: 24183683.2
(22) Date of filing: 21.06.2024
(51) Int. Cl.: H02K 15/04, H02K 15/10

(54) **INDUCTION DEVICE FOR HAIRPIN STATOR OF AN ELECTRIC MOTOR**

(71) Applicant: Politubes S.r.L., 20122 Milano (IT)
(72) Inventor: PENZO, Federico, Segrate (IT)
(74) Representative: Lunati & Mazzoni S.r.L.

(57) **Abstract**

An induction device (1) for hairpin stator of an electric motor is envisaged, comprising a conductive element (2) predominantly developing along a predetermined trajectory (2a) approximately U-shaped, configured to allow alternating current to flow along the predetermined trajectory (2a) to induce an external magnetic field, and comprising two arms (20) connected via a fitting (21) along the predetermined trajectory (2a) and each defining a free end (20a), opposite the fitting (21), suitable for connection to an electrical manifold and/or an end (20a) of another conductive element (2); and a coating (3) electrically insulated and developing around at least part of the conductive element (2) and comprising a tape (30) of spiral insulating material, with uniform wall thickness and extending predominantly along said predetermined trajectory (2a) on at least part of an arm (20) away from the end (20a).

## Description

This invention relates to an induction device for hairpin stator of an electric motor of the type specified in the preamble of the first claim.

Specifically, this invention relates to an induction device, including a hairpin or a group of hairpins, also known by the terms including, but not limited to: *ipins, wavepins, spins, xpins, w-pins,* suitable for being packed together inside seats or slots made on the stator of an alternating current electric motor.

As is known, alternating current electric motors are motors whose operation is given by the variation of the direction of the current, flowing within a stator, the alternation of which results in the rotation of the induced magnetic field and, therefore, the proportional movement of a rotor, equipped with magnets, with respect to the stator. The rotor in electric motors, also called the armature, is the rotating part. The type of rotor changes depending on the type of electric motor and can, for example, be squirrel cage, permanent magnet, or wound.

The stator is the fixed part of the electric motor in which there are electrical windings called inductors. Customarily, the windings are made of enameled copper wire and are housed in the specially cut slots in the stator.

However, the windings of the latest generation of electric motors can be made as hairpins and the like. Hairpins are basically elements having a U-shape and shaped in such a way that they can be overlapped to make several layers of winding in which current can flow alternately, optimizing the fill factor within the stator cavity compared with traditional copper wires.

Since it basically has two arms and a fitting, the hairpins are placed on the stator in such a way that the arms are housed within a respective slot. In addition, hairpins are generally arranged in induction groups and are then packed in such a way that the arms are mutually overlapping and inserted, together, within a slot.

To achieve this configuration, usually the hairpin arms are mutually welded and then introduced into the slot. In any case, the groups consist of one or more hairpins, and the hairpin arms, which are present within the slot, are appropriately insulated, usually through the use of a sheet surmounted around one or more of the arms.

The prior art just described includes some important drawbacks.

In particular, the need to adopt overlapping insulating sheets around one or more arms implies that the sheets define areas of overlap of their flaps resulting in a localized increase in thickness of the induction elements.

The increase in thickness thus results in the ability to introduce less conductive material within the stator slot.

In addition, the overlap zones are characterized by heat spikes during motor operation, which can damage the permanent magnets and reduce the overall efficiency of the electric motor.

Thus, also because of any "dog ears" that may form during overlapping of the insulating sheet flaps, some discharges may at least partially exit the stator, with obvious safety and performance consequences.

In addition, the non-tight closure of traditional films can cause micro-shifts in the insulation during the life of the motor.

Furthermore, the increased thicknesses due to the overlap can cause jamming or leakage of insulation from the slot when inserting hairpins.

In this situation, the technical task underlying this invention is to devise an improved induction device for hairpin stator of an electric motor capable of substantially overcoming at least part of the aforementioned drawbacks.

Within the scope of said technical task, it is an important purpose of the invention to obtain an induction device for hairpin stator of an electric motor that allows to isolate part of the induction device, with respect to the stator, avoiding to increase the insulation thickness so as to maximize the presence of conductive material inside the slot.

Another important purpose of the invention is to make an induction device for hairpin stator of an electric motor that avoids the formation of localized heat spikes.

Therefore, a further purpose of the invention is to realize an induction device for hairpin stator of an electric motor that ensures high operating efficiency of the electric motor.

In addition, another task of the invention is to obtain an induction device for hairpin stator of an electric motor that prevents even partial discharge from the stator slots and thus allows for a high-performance and safe electric motor.

The technical task and the specified aims are achieved by an induction device for hairpin stator of an electric motor as claimed in the annexed claim 1.

Preferred embodiments are highlighted in the dependent claims.

The characteristics and benefits of the invention will be clarified in the following detailed description of some preferred embodiments of the invention, with reference to the accompanying drawings, wherein:

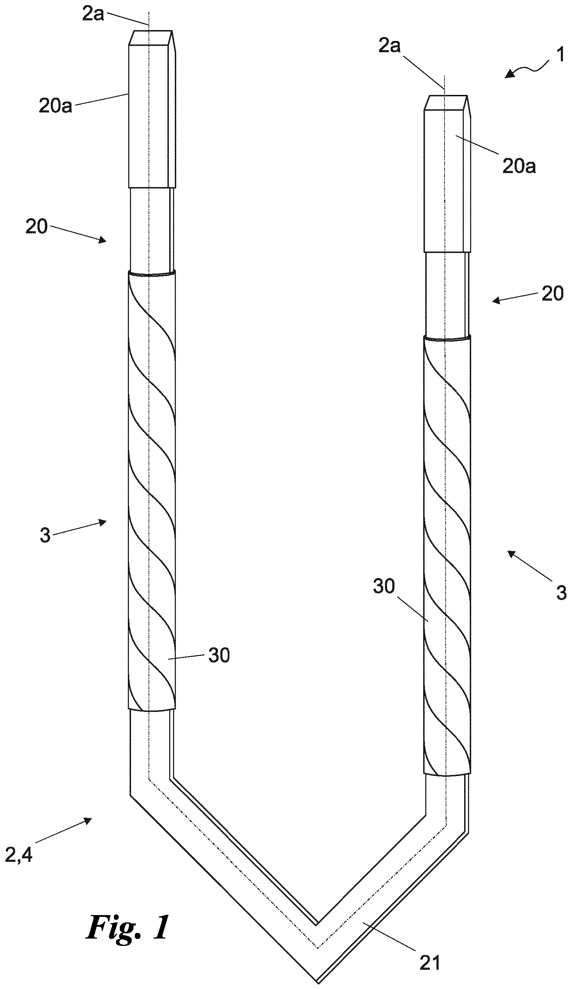

**Fig. 1** shows a perspective view of an induction device for hairpin stator of an electric motor according to the invention in which the device is formed by a hairpin;

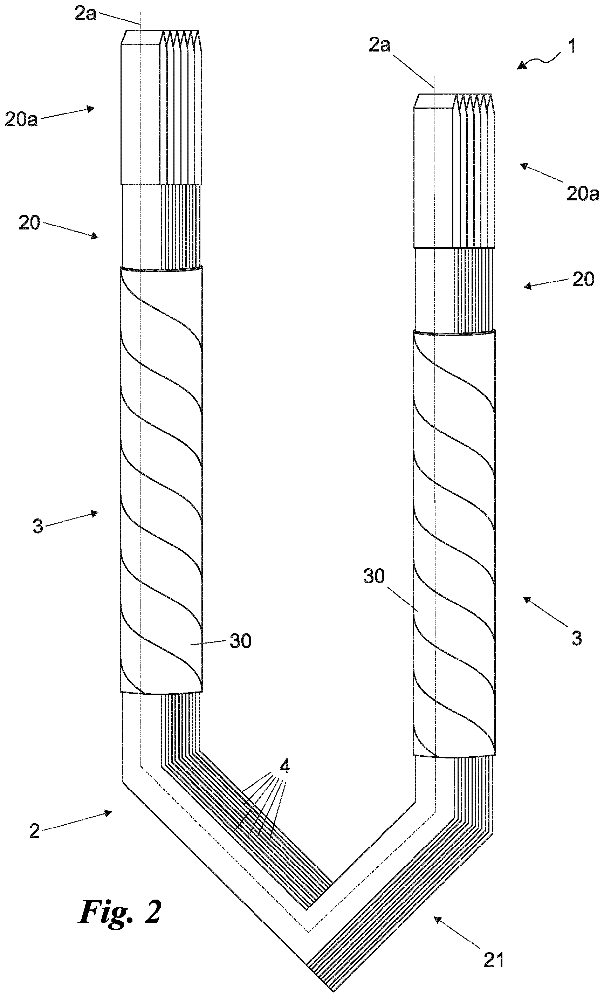

**Fig. 2** shows a perspective view of an induction device for hairpin stator of an electric motor according to the invention in which the device is formed by a group of hairpins;
**Fig.** 3 shows a perspective view of a portion of an induction device for hairpin stator of an electric motor according to the invention in which the portion is defined by an arm part and the device consists of a group of hairpins;
**Fig. 4** illustrates a front view of the induction device in Fig. 2 or 3 in which it is evident that the insulating membrane is wrapped around the entire perimeter defined by the conductive element;
**Fig. 5** is a perspective view of a coating of an induction device for hairpin stator of an electric motor according to the invention.

In this document, when measurements, values, shapes, and geometric references (such as perpendicularity and parallelism) are associated with words like "approximately" or other similar terms, such as "almost" or "substantially", they shall be understood as except for errors of measurement or imprecisions due to errors of production and/or manufacturing and, above all, except for a slight departure from the value, measurement, shape, or geometric reference with which it is associated. For example, if associated with a value, such terms preferably indicate a departure of no more than 10% of the value itself.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

Unless otherwise stated, the measurements and data reported in this text shall be considered as performed in International Standard Atmosphere ICAO (ISO 2533:1975).

With reference to the figures, the induction device for hairpin stator of an electric motor according to the invention is globally indicated with the number 1.

Device 1 is basically designed to induce the formation of a rotating magnetic field, proportional to the variation of an alternating current flowing within device 1.

Therefore, device 1 is suitable for use inside an electric motor stator. Thus, the invention comprises the production of a new stator comprising device 1. In particular, preferably, device 1 is integral to the stator and the latter is of the hairpin type. In even more detail, preferably, the hairpin stator comprises, as is known, a plurality of seats arranged radially around its own central axis. Thus, at least part of device 1 is housed in one or more stator seats.

In addition, the invention also enables the construction of a new electric motor. The electric motor preferably includes a stator as described above. Of course, the stator equipped with device 1 creates a rotating magnetic field suitable for allowing the rotation of an electric motor rotor.

Device 1, in each case, includes a conductive element 2.

Conductive element 2 is basically the element within which alternating current is conveyed to create a rotating magnetic field.

Therefore, conductive element 2 preferably includes a metal. This means that, for example, the metal may be copper, silver, or even gold.

Conductive element 2 mainly develops along a predetermined trajectory **2a.** The predetermined trajectory 2a is basically the trajectory along which the conductive element 2 extends.

The predetermined trajectory 2a is preferably approximately U-shaped. The term approximately means that the shape is substantially or nearly U-shaped, but it is not necessarily exactly U-shaped. In fact, to define approximately a U shape it is sufficient that there are two oblong portions and a central portion connecting the oblong portions, appropriately two of their ends, and in which the oblong portions extend from the same side as compared with the central portion.

Preferably, in fact, conductive element 2 includes at least two arms 20. Said arms 20 can identify the above oblong portions.

The arms 20 each develop along part of the development trajectory 2a. In addition, the arms 20 are mutually connected along the predetermined trajectory 2a by a fitting **21,** which can be identified in said central portion. Thus, arms 20 can, for example, be mutually parallel and connected at two ends by fitting 21.

In any case, preferably, each of the arms 20 defines one end **20a.**

The end 20a is basically opposite to the fitting 21 on the arm 20. In addition, the free end 20a is suitable for being connected to an electric manifold and/or an end 20a of another conductive element 2.

In any case, through the ends 20a of the arms 20 of a conductive element, current can be introduced and/or let out within the conductive element 2. The latter is then configured to allow alternating current to flow along the predetermined trajectory 2a to induce an external, preferably rotating, magnetic field.

Arms 20 and fitting 21, in general, define for conductive element 2 a basically hairpin shape. Conductive element 2 may define its overall shape, or it may just include, or consist of, at least one hairpin **4.** Hairpin 4 is, for hairpin stators of electric motors, an element in itself widely known in the current state of the art.

In addition to what is described, conductive element 2 may include, or consist of, a group of hairpins 4. The latter, if present as a group, are preferably mutually packed and stacked perpendicular to the predetermined trajectory 2a, so that they are mutually parallel to each other with respect to the predetermined trajectory 2a, as is commonly the case within hairpin stators.

In any case, device 1 preferably includes a coating **3.**

Coating 3 is preferably electrically insulating. It also develops around at least part of the conductive element 2. Therefore, coating 3 is capable of electrically insulating at least part of conductive element 2.

Coating 3, preferably, develops along the predetermined trajectory 2a.

Therefore, for coating 3, the predetermined trajectory 2a is basically a longitudinal axis and, as further specified below, a central axis.

Preferably, as a whole, coating 3 achieves a tubular, possibly cylindrical shape, defining inner or diagonal diameters between 10 and 80 mm with lengths preferably between 10 and 6000 mm.

In addition, coating 3 includes at least one tape **30,** which preferably constitutes coating 3.

Tape 30 is preferably of the spiral type, i.e., obtained by a spiraling process, described below. Coating 3 also preferably has a uniform or constant wall thickness, because each layer is substantially made up of one or more tapes 30 characterized by a helical, or spiral, development trajectory, and juxtaposed and, more precisely, placed substantially along one another so as to define said substantially uniform thickness.

Coating 3 preferably extends along the predetermined trajectory 2a over at least part of one arm 20 and possibly both arms 20. In particular, preferably, tape 30 is placed on at least the portion of arm 20 away from end 20a. In this way the end 20a can be used as an electric connector, optionally protruding from the tape 30, while the rest of the arm 20 is insulated. Preferably, as obvious, the fitting 21 protrudes from the tape 30 obviously on the opposite side from the end 20a.

When device 1 is part of a stator equipped with radial seats, in fact, the arms 20 of the device are preferably each housed in a respective seat. With respect to the seats of device 1, generally, fitting 21 and ends 20a come out from the seats, which can be electrically connected to manifolds, or connected to other ends 20a of other devices 1 distributed in the stator.

Preferably, therefore, tape 30 defines a thickness of less than 1 mm, preferably 0.5 mm, and more preferably between 100 µm and 300 µm. Even more in detail, the second tape 30 can define a thickness between 150 µm and 250 µm, possibly 0.21 mm.

Tape 30 can basically include a thin film or strip.

Advantageously, moreover, tape 30 includes, or consists of, a polymeric material. In addition, tape 30 can include, or be made up of, materials of different types. For example, tape 30 may include Peek^{®}, Ajedium Peek^{®}, polyamides, or aramid papers or polyester or micate aramid papers.

In the preferred embodiment, tape 30 includes, or consists of, polyamides. Examples include materials such as Kapton DuPont^{®}, Versiv Saint Gobain^{®}, Ajedium PPSU^{®} or others.

Aramid papers may include, for example, Nomex DuPont^{®} or Metastar^{®} or others. Among polyesters, Mylar DuPont^{®} can be used, for example.

In general, after assembly, coating 3 surrounds arm 20 so that tape 30 is completely in contact with arm 20. This means that tape 30 always adheres to arm 20.

The operation of the device 1 previously described in structural terms is basically similar to the operation of any electric motor stator hairpin.

The invention also encompasses a new process of making an induction device 1 for hairpin stator of electric motor. Specifically, the process enables to produce the device 1.

Therefore, it includes at least a preparation phase and a spiraling phase.

In the preparation phase preferably the conductive element 2 is prepared for the next processing to form the device 1.

Preferably, coating 3 is spiraled in cylindrical form with circular normal section. Specifically, during spiraling, advantageously, tape 30 can be wound around a support, preferably cylindrical with circular normal section, with a given pitch. Specifically, tape 30 defines a width L.

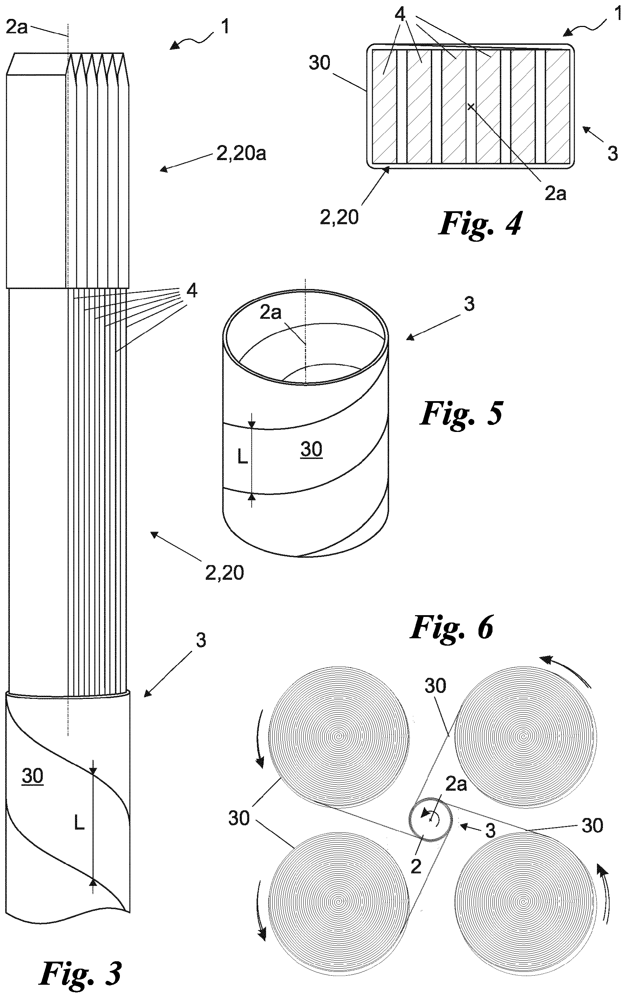

The width L is basically the cross-sectional dimension of tape 30, i.e., that which is essentially parallel to the predetermined trajectory 2a when the spiraling of tape 30 is complete (Fig. 5).

Advantageously, tape 30 is spiraled with a pitch at least equal to the width L. Thus, tape 30 comprises different portions characterized by a trajectory of helical, or spiral, development, and juxtaposed and, more precisely, placed substantially along one another so as to advantageously define a substantially uniform thickness for the coating 3, in which there are no overlaps between different portions of tape 30.

These processes are known and are described, for example, in the applicant's own European patent EP-B-EP2763283.

Following spiraling, coating 3 may be cut crosswise to obtain the desired length. It is then arranged, preferably together with other spiral coatings 3, in an appropriate seat.

Next, conductive elements 2 are inserted, preferably a series of elements 2 together, within the coatings 3 to take the configuration previously described and illustrated. In addition, the conductive elements 2 deform the coatings 3, which take a countershape to the conductive element itself, thus having a substantially rectangular normal section.

The induction device 1 for hairpin stator of an electric motor according to the invention achieves important advantages.

In fact, the induction device 1 for hairpin stator of an electric motor, thanks to the conformation of the coating 3, allows to isolate part of the induction device 1, particularly at least the portion of the arm 20 inserted in the seat, from the stator, in detail from said seat, avoiding increasing the insulation thickness, also due to the absence of overlaps, so as to maximize the presence of conductive material.

In addition, the induction device 1 for hairpin stator of an electric motor avoids the formation of localized heat spikes since the tape 30 develops along and around the predetermined trajectory 2a without forming overlapping zones. This advantage translates into higher energy efficiency and lower consumption of the electric motor, and thus into important environmental benefits.

Therefore, the induction device 1 for hairpin stator of an electric motor ensures high operating efficiency of the electric motor.

In conclusion, the induction device 1 for hairpin stator of an electric motor prevents even partial discharge from the stator slots and thus allows for a high-performance and safe electric motor.

Another advantage is the fact that device 1, presenting a tape 30 of constant thickness since it has no overlaps, is easily inserted into the seat with extreme precision, preventing, for example, any localized thickening from causing incorrect positioning as is the case in the prior art.

The latter advantage also achieves lower vibrations during use of the motor and longer service life.

Variations may be made to the invention that fall within the scope of the inventive concept defined in the claims.

In this context, all the details can be replaced by equivalent elements and any materials, shapes and dimensions can be used.

## Claims

1. Induction device (1) for hairpin stator of an electric motor comprising:
- a conductive element (2) developing predominantly along a predetermined trajectory (2a) approximately U-shaped, configured to allow alternating current to flow along said predetermined trajectory (2a) to induce an external magnetic field, and comprising two arms (20) connected by means of a fitting (21) along said predetermined trajectory (2a) and each defining a free end (20a), in a position opposite to said fitting (21), suitable to be connected to an electric manifold and/or one said end (20a) of another said conductive element (2); and
- an electrically insulating coating (3) developing around at least part of said conductive element (2);
and **characterised by the fact** that
- said covering (3) comprises a tape (30) of spiral insulating material, having uniform wall thickness and extending predominantly along said predetermined trajectory (2a) on at least part of one said arm (20) away from said end (20a).

2. Device (1) according to claim 1, wherein said conductive element (2) includes at least one hairpin (4).

3. Device (1) according to any of the preceding claims, wherein said conductive element (2) consists solely of one said hairpin (4) or a group of said hairpins (4) mutually packed and stacked parallel to said predetermined trajectory (2a).

4. Device (1) according to any of the preceding claims, wherein said coating (3) surrounds said arm (20) in such a manner that said tape (30) is completely in contact with said arm (20).

5. Device (1) according to any of the preceding claims, wherein said tape (30) defines a width (L) and is spiraled with a pitch equal to or greater than said width (L) so that different portions of said tape (30) are placed in mutual contact without overlapping.

6. Device (1) according to the previous claim, in which said pitch is greater than said length (L) by an amount between 1 and 100 µm.

7. Device (1) according to any previous claim, wherein said tape (30) is made of polymeric material.

8. Device (1) according to any previous claim, wherein said tape (30) includes, or consists of, polyamide.

9. Stator for electric motor including a plurality of seats arranged radially around its own central axis and at least one device (1) according to any preceding claim in which said arms (20) are each housed in a respective seat.

10. Electric motor including a stator according to the previous claim.

11. Method for producing an induction device (1) for hairpin stator of an electric motor including:
- arranging at least a conductive element (2) developing predominantly along a predetermined trajectory (2a) approximately U-shaped, configured to allow alternating current to flow along said predetermined trajectory (2a) to induce an external magnetic field, and comprising two arms (20) connected by means of a fitting (21) along said predetermined trajectory (2a) and each defining a free end (20a), suitable to be connected to an electrical manifold and/or one said end (20a) of another said conductive element (2);
and **characterised by** further comprising:
- a spiraling phase wherein at least one tape (30) of electrically insulating material is spiraled around a cylindrical medium to form at least one coating (3),
- an insertion phase in which said conductive element (2) is inserted into said insulated coating (3) so that the latter is arranged along said predetermined trajectory (2a) on at least part of a said arm (20) away from said end (20a).

12. Method according to the preceding claim, in which said tape (30) defines a width (L) and is spiraled with a pitch equal to or greater than said width (L) so that different portions of said tape (30) are in mutual contact without overlapping.

## Amended claims

### Amended claims in accordance with Rule 137(2) EPC.

**1.** Method for producing an induction device (1) for hairpin stator of an electric motor including:
- arranging at least a conductive element (2) developing predominantly along a predetermined trajectory (2a) approximately U-shaped, configured to allow alternating current to flow along said predetermined trajectory (2a) to induce an external magnetic field, and comprising two arms (20) connected by means of a fitting (21) along said predetermined trajectory (2a) and each defining a free end (20a), suitable to be connected to an electrical manifold and/or one said end (20a) of another said conductive element (2);
and **characterised by** further comprising:
- a spiraling phase wherein at least one tape (30) of electrically insulating material is spiraled around a cylindrical medium to form at least one coating (3),
- an insertion phase in which said conductive element (2) is inserted into said insulated coating (3) so that the latter is arranged along said predetermined trajectory (2a) on at least part of a said arm (20) away from said end (20a).

**2.** Method according to the preceding claim, in which said tape (30) defines a width (L) and is spiraled with a pitch equal to or greater than said width (L) so that different portions of said tape (30) are in mutual contact without overlapping.

**3.** Method according to the previous claim, in which said pitch is greater than said width (L) by an amount between 1 and 100 µm.

**4.** Method according to any of the preceding claims, wherein said conductive element (2) includes at least one hairpin (4).

**5.** Method according to any of the preceding claims, wherein said conductive element (2) consists solely of one said hairpin (4) or a group of said hairpins (4) mutually packed and stacked parallel to said predetermined trajectory (2a).

**6.** Method according to any previous claim, wherein said tape (30) is made of polymeric material.

**7.** Method according to any previous claim, wherein said tape (30) includes, or consists of, polyamide.

**1.** Method for producing an induction device (1) for hairpin stator of an electric motor including:
- arranging at least a conductive element (2) developing predominantly along a predetermined trajectory (2a) approximately U-shaped, configured to allow alternating current to flow along said predetermined trajectory (2a) to induce an external magnetic field, and comprising two arms (20) connected by means of a fitting (21) along said predetermined trajectory (2a) and each defining a free end (20a), suitable to be connected to an electrical manifold and/or one said end (20a) of another said conductive element (2);
and **characterised by** further comprising:
- a spiraling phase wherein at least one tape (30) of electrically insulating material is spiraled around a cylindrical medium to form at least one coating (3),
- an insertion phase in which said conductive element (2) is inserted into said insulated coating (3) so that the latter is arranged along said predetermined trajectory (2a) on at least part of a said arm (20) away from said end (20a), and
- wherein said tape (30) defines a width (L) and is spiraled with a pitch equal to or greater than said width (L) so that different portions of said tape (30) are in mutual contact without overlapping.

**2.** Method according to the previous claim, in which said pitch is greater than said width (L) by an amount between 1 and 100 µm.

**3.** Method according to any of the preceding claims, wherein said conductive element (2) includes at least one hairpin (4).

**4.** Method according to any of the preceding claims, wherein said conductive element (2) consists solely of one said hairpin (4) or a group of said hairpins (4) mutually packed and stacked parallel to said predetermined trajectory (2a).

**5.** Method according to any previous claim, wherein said tape (30) is made of polymeric material.

**6.** Method according to any previous claim, wherein said tape (30) includes, or consists of, polyamide.
